# EUROPÄISCHE PATENTSCHRIFT

(11) **EP 0 724 095 B1**
(45) Veröffentlichungstag und Bekanntmachung des Hinweises auf die Patenterteilung: **23.09.1998**
(21) Anmeldenummer: 95118101.5
(22) Anmeldetag: 17.11.1995
(51) Int. Cl.: F16H 57/00, F16H 7/02

(54) **Zahnriementrieb**
Toothed-belt drive
Transmission à courroie crantée

(30) Priorität: 28.01.1995 DE 19502722
(43) Veröffentlichungstag der Anmeldung: 31.07.1996
(73) Patentinhaber: Dr.Ing.h.c. F. Porsche Aktiengesellschaft, 70435 Stuttgart (DE)
(72) Erfinder: Grossmann, Horst, D-75180 Pforzheim (DE)

(56) Entgegenhaltungen:
- DE-A- 3 933 847
- PATENT ABSTRACTS OF JAPAN vol. 016, no. 343 (M-1285), 24.Juli 1992 & JP-A-04 102755 (TOYOTA MOTOR CORP;OTHERS: 01), 3.April 1992,
- KONSTRUKTION, Bd. 45, Nr. 9, 1.Januar 1993, Seiten 275-278, XP000195239 BOETTGER A ET AL: "RIEMENGETRIEBE, GERAEUSCHMINDERUNG, ANTRIEBSTECHNIK TEILUNG KORRIGIERT - LAERM REDUZIERT. GERAEUSCHE AN ZAHNRIEMENGETRIEBEN, URSACHEN UND PRIMAERE GEGENMASSNAHMEN"

## Beschreibung

Die Erfindung bezieht sich auf einen Zahnriementrieb mit mindestens zwei Zahnriemenrädern nach dem Oberbegriff des Anspruchs 1.

Aus der EP-0 536 527 A1 ist ein Zahnriementrieb mit zumindest zwei Zahnrädern und zumindest einer Spannrolle bekannt, die zur Geräuschverminderung an der ungezahnten Seite des Zahnriemens angreift. Die Spannrolle weist an ihrem Außenumfang im Querschnitt eine konkave Profilwölbung auf. Des weiteren ist aus der DE-PS 29 10 871 eine Zahnriementrieb bekannt, bei dem zur Verringerung von Geräuschen, die während des Betriebs des Zahnriementriebs entstehen- gewisse aufeinander abgestimmte Veränderungen des Zahnprofiles am Zahnriemen und an den Zahnriemenrädern- im Querschnitt betrachtet, vorgeschlagen worden.

Aufgabe der Erfindung ist es, einen Zahnriementrieb mit zumindestens einer Rückenrolle, auch Beruhigungsrolle genannt, im Trum zwischen einem Nockenwellenrad zu schaffen und mit der bei geringem Aufwand eine Verringerung von störenden Geräuschen erzielt wird, die durch Schwingungen im Zahnriementrieb auftreten können.

Diese Aufgabe wird erfindungsgemäß durch die kennzeichnenden Merkmale des Anspruchs 1 gelöst. Weitere vorteilhafte Merkmale beinhalten die Unteransprüche.

Durch die Ausbildung der Rückenrolle mit über den Umfang angeordneten, nahezu aneinander angrenzenden, relativ schmalen Flächenabschnitten, wird ein Aufbau von Resonanzen unterbunden, die zu störenden Geräuschen führen.

Die Anzahl der Flächenabschnitte ist zu diesem Zweck über den Umfang der Rolle größer als die über den Umfang der Rolle angeordneten Zähne des Zahnriemens.

Die Flächenabschnitte können auf einem separaten Ring oder direkt auf der Rolle vorgesehen sein. Der Ring kann aus einem Kunststoff oder einem Metall bestehen.

Zwischen aneinandergrenzenden ebenenen Flächenabschnitten verbleibt jeweils ein kleiner Abstand unbearbeiteter Fläche, welche von der urprünglichen Umfangfläche gebildet wird.

Zur Absenkung von Geräuschen am Zahnriementrieb sind' auch unregelmäßig breite und ebene Flächenabschnitte über den Umfang der Rolle möglich, die aber in der Anzahl insgesamt auch größer sind als die Anzahl der Zähne des Riemens über den Umfang der Rolle gesehen.

Die Beruhigungsrolle ist zusätzlich zu einer Spannrolle am Zahnriementrieb vorgesehen. Diese Beruhigungsrolle ist im Lasttrum zwischen einem Nockenwellenrad für die Einlassventile und einem Kurbelwellenrad außenseitig des Zahnriemens angeordnet und sucht den Zahnriemen zusätzlich zu spannen.

Ein Ausführungsbeispiel der Erfindung ist in der Zeichnung dargestellt und wird im folgenden näher beschrieben.
Es zeigen
- Fig. 1: eine schematische Frontansicht einer Brennkraftmaschine mit einem Zahnriementrieb von der Kurbelwelle zu den oberen Nockenwellen mit Spannrolle und Beruhigungsrolle,

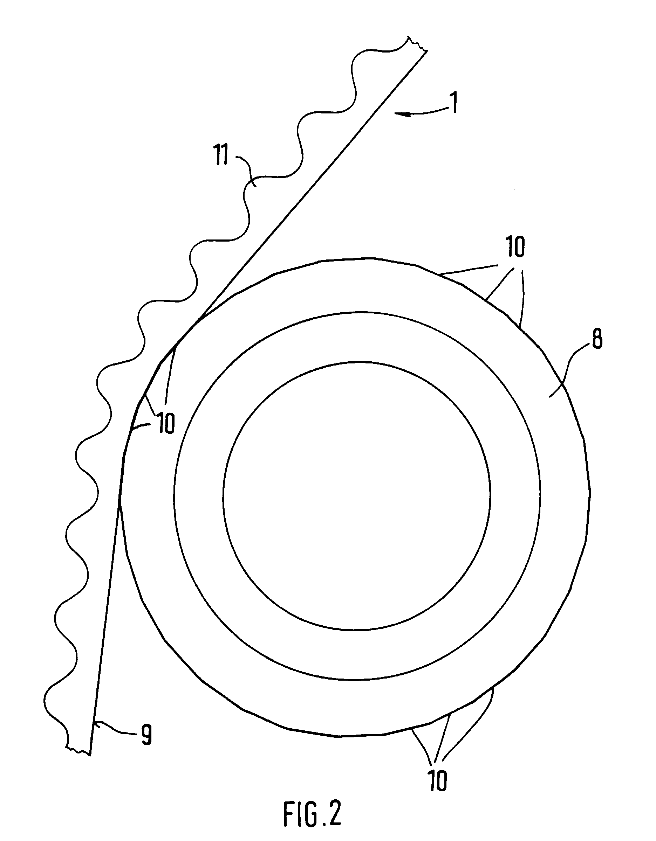

- Fig. 2: eine vergrößerte Ansicht auf die Beruhigungsrolle mit Flächenabschnitten und Zahnriemen.

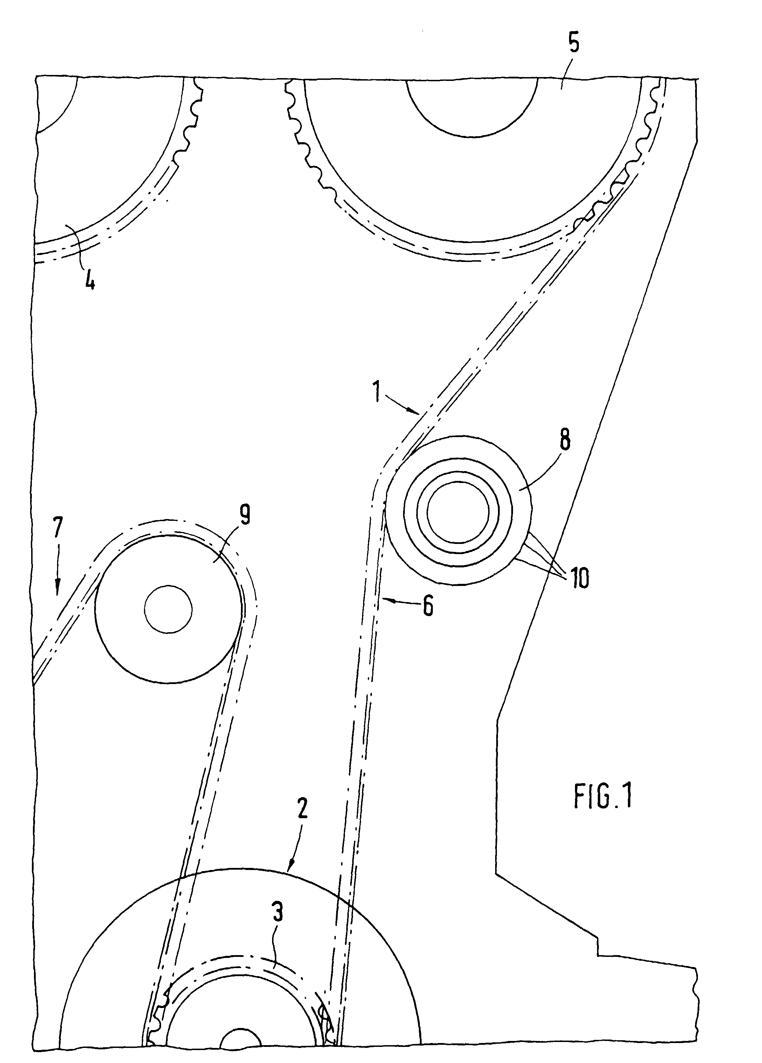

Bei dem in Fig. 1 schematisch dargestellten Zahnriementrieb für eine Brennkraftmaschine treibt ein Zahnriemen 1 mit einer innenseitigen Zahnproflierung 11 und einer außenseitigen glatten Fläche 9 von einer Kurbelwelle 2 über ein mit dieser verbundenem ersten Zahnriemenrad 3 ein zweites Zahnriemenrad 4 und eine drittes Zahnriemenrad 5 an. Diese Zahnriemenräder 4 und 5 sind mit Nockenwellen für Auslaß- und Einlaßventile verbunden. Bei rechtsdrehender Kurbelwelle 2 ergibt sich hierbei ein Lasttrum 6 und ein Lostrum 7. Das Lostrum 7 ist über einen Spannrolle 9 und das Lasttrum 6 über eine Beruhigungsrolle 8 geführt. Auf der Beruhigungsrolle 8 ist der Zahnriemen 1 mit seiner glatten Fläche 9 geführt, die bei diesem Zahnriementrieb die Außenseite bildet.

Die Beruhigungsrolle 8, auch Rückenrolle genannt, weist über den Umfang ebene Flächenabschnitte 10 auf, die der glatten Rückenfläche 9 des Zahnriemens 1 zugerichetet sind. Diese Abschnitte 10 sind entweder von gleicher Breite oder unterschiedlicher Breite, was ausschließlich von den Gegebenheiten des Zahnriemengetriebes im Fahrzeugbetrieb abhängig ist.

Insbesondere sollen die Flächenabschnitte 10 insgesamt von größerer Anzahl über den Umfang der Rolle sein als die Zahl der Zähne 11 des Zahnriemens 1 über den Umfang der Rolle 8. Das Verhältnis Zähne zu Abschnitten beträgt etwa 1:1,4 bis 1,7.

Die Flächenabschnitte 10 sind entweder direkt auf die Rolle 8 aufgebracht oder auf einem Ring aus Kunststoff oder Metall angeordnet, der dann mit der Rolle 8 fest verbindbar ist.

Damit die Herstellung der Flächenabschnitte einfacher durchgeführt werden kann, bleibt zwischen den benachbarten Flächenabschnitten 10 jeweils ein schmaler Spalt ursprünglicher Umfangfläche.

## Patentansprüche

1. Zahnriementrieb mit mindestens zwei Zahnriemenrädern und mindestens einer Spann- und Rückenrolle, wobei diese Rolle an der ungezahnten Seite des Zahnriemens angreift und am Motorgehäuse gelagert ist, dadurch gekennzeichnet, daß die Rückenrolle (8) an ihrem Außenumfang eine Vielzahl von ebenen Flächenabschnitten (10) aufweist, die sich über den gesamten Umfang der Rolle (8) erstrecken und die Anzahl dieser Flächen (10) größer ist als die der Zähne (11) des Zahnriemens (1) über den Umfang der Rolle (8) gesehen.

2. Zahnriementrieb nach Anspruch 1, dadurch gekennzeichnet, daß die Flächenabschnitte (10) auf einem separaten Ring angeordnet sind, der mit der Rolle (8) verbindbar ist.

3. Zahnriementrieb nach den Ansprüchen 1 oder 2, dadurch gekennzeichnet, daß die Flächenabschnitte (10) unregelmäßig über den Umfang der Rolle (8) verteilt sind.

4. Zahnriementrieb nach Anspruch 1 oder einem der vorhergehend Ansprüche, dadurch gekennzeichnet, daß die Rückenrolle (8) im Lasttrum (6) des Zahnriemens (1) zwischen einem Kurbelwellenrad (3) und einem Nockenwellenrad (5) für die Einlaßventile angeordnet ist und die Rolle (8) an der nach außen gerichteten glatten Seite des Zahnriemens (1) anliegt.

5. Zahnriementrieb nach Anspruch 1 oder einem der vorhergehenden Ansprüche, dadurch gekennzeichnet, daß das Verhältnis von Zähnen (11) zu Flächenabschnitten (10) etwa 1:1,4 bis 1,7 beträgt.

## Claims

1. A toothed-belt drive with at least two toothed-belt wheels and at least one tensioning and backing pulley, the said pulley engaging on the side of the toothed belt without teeth and being mounted on the engine housing, **characterized in that** the backing pulley (8) is provided on the outer periphery thereof with a plurality of flat surface portions (10) which extend over the entire periphery of the pulley (8), and the number of the said portions (10) is greater than that of the teeth (11) of the toothed belt (1) as viewed over the periphery of the pulley (8).

2. A toothed-belt drive according to Claim 1, **characterized in that** the surface portions (10) are arranged on a separate ring which can be connected to the pulley (8).

3. A toothed-belt drive according to Claim 1 or 2, **characterized in that** the surface portions (10) are distributed irregularly over the periphery of the pulley (8).

4. A toothed-belt drive according to Claim 1 or one of the preceding Claims, **characterized in that** the backing pulley (8) is arranged in the tensioned run (6) of the toothed belt (1) between a crankshaft gearwheel (3) and a camshaft gearwheel (5) for the inlet valves, and the pulley (8) rests against the smooth side of the toothed belt (1) directed towards the outside.

5. A toothed-belt drive according to Claim 1 or one of the preceding Claims, **characterized in that** the ratio of the teeth (11) to the surface portions (10) is from about 1 : 1·4 to 1·7.

## Revendications

1. Transmission par courroie crantée comportant au moins deux poulies pour courroie crantée et au moins un rouleau tendeur et pousseur, ce rouleau agissant sur le côté non cranté de la courroie crantée et étant monté sur le carter moteur, caractérisée en ce que le rouleau pousseur (8) présente sur son pourtour extérieur un grand nombre de portions de surface (10) planes, qui s'étendent sur tout le pourtour du rouleau (8), et le nombre de ces surfaces (10) est supérieur à celui des crans (11) de la courroie crantée (1), vu sur le pourtour du rouleau (8).

2. Transmission par courroie crantée selon la revendication 1, caractérisée en ce que les portions de surface (10) sont disposées sur un anneau séparé, qui peut être relié au rouleau (8).

3. Transmission par courroie crantée selon les revendications 1 ou 2, caractérisée en ce que les portions de surface (10) sont réparties irrégulièrement sur le pourtour du rouleau (8).

4. Transmission par courroie crantée selon la revendication 1 ou l'une des revendications précédentes, caractérisée en ce que le rouleau pousseur (8) est disposé sur le brin de charge (6) de la courroie crantée (1), entre une poulie de vilebrequin (3) et une poulie d'arbre à came (5) pour les soupapes d'admission, et le rouleau (8) s'applique contre le côté lisse, dirigé vers l'extérieur, de la courroie crantée (1).

5. Transmission par courroie crantée selon la revendication 1 ou l'une des revendications précédentes, caractérisée en ce que le rapport des crans (11) aux portions de surface (10) est d'environ 1:1,4 à 1:1,7.
